# EUROPEAN PATENT APPLICATION

(11) **EP 2 110 550 A1**
(43) Date of publication of application: **21.10.2009**
(21) Application number: 08718457.8
(22) Date of filing: 21.01.2008
(51) Int. Cl.: F03D 7/04

(54) **SENSORISED MULTIPLIER**

(30) Priority: 26.01.2007 ES 200700444
(71) Applicant: Gamesa Innovation & Technology, S.L., 31013 Pamplona, Navarra (ES)
(72) Inventor: GURUTZ, URZELAI IRIBARREN, E-31013 Pamplona (Navarra) (ES)
(86) International application number: PCT/ES2008/070009
(87) International publication number: WO 2008/090253

(57) **Abstract**

**Summary.**

Sensorized gearbox with a plurality of sensors (8) and (14) assembled in a set of fixed parts (5) and (12) to the gearbox (1), measuring loads in the rotating shaft (11) and axial and radial forces derived from wind turbine operation.

Sensors (8) and (14) assembled on the selected parts (5) and (12) detect in a specific time interval or during the life of the gearbox, measuring instantaneously and sending data to a control system that regulates the machine's power by controlling the r.p.m., wind turbine pitch or emergency stop.

## Description

### Objective of the invention.

In the present invention, displacement and load sensors have been implemented to measure the radial and axial movements of a rotating shaft and the forces transmitted by this shaft to the gearbox bearings and body.

Displacement and forces measurements are carried out on the shaft supports and gearbox bearings, obtaining deformations affecting the components, magnitudes and direction of the reactions in the shaft support and the ratio between the axial forces and radial forces obtained at each moment.

This system is applicable to any mechanical system with rotary elements or rotary machine, with shafts, bearings and shaft bearings, and is particularly applicable to the gearbox used in wind turbines.

### Background of the invention.

Gearboxes are components subjected to structural and dynamic forces with a very marked oscillating component, which causes mechanical fatigue and therefore an increase in the probability of its structural integrity failing.

Current gearboxes are designed and manufactured with wide safety coefficients due to the uncertainty of operating loads, which implies the overdimensioning of their designs. To optimize these components, it is necessary to reduce the aforementioned coefficients considering the real loads state they are subjected to, both in probabilistically predominant magnitudes and transmission directions.

The use of sensors installed on the structure, components and auxiliary gearbox elements provides direct and/or indirect information on loads forces and directions as well as the real deformations they are subjected to, which helps to reduce these safety coefficients used by the uncertainty of the real loads.

The use of sensors located in wind power components is mentioned in document WO 2005/010358 which includes a wind turbine with a sensorized main shaft whose control reduces the effects of the loads. Sensorization is applied in order to understand the forces caused by the rotor in the main shaft and to therefore regulate the pitch or variable angle of the wind turbine blades.

The US 2005/0282678 document presents a torsion sensor for a gearbox, being the joint elements where axial and longitudinal movement between these joint elements is determined, specially sensorized, although the geometry, layout and operation of the gearbox differs from the objective of the present invention.

Finally, patent EP 1292809 is mentioned, that presents a sensor to detect expansion and tension in solid materials, with the sensors installed inside the part, while the outer part has multiple axially placed grooves.

None of the patents mentioned sensorizes a fixed set in the machine to obtain the loads in the rotating shaft and axial and radial forces derived from gearbox operation.

### Description of the invention.

The invention is aimed at having sensors in the body or casing and auxiliary gearbox elements to measure their local deformations and the forces the axes and bearings of a rotary machine are subjected to in general and particularly those of a gearbox, forces that are transmitted via the axes, supported at the same time by these bearings.

The forces withstood by the axes are transmitted to the bearings by contact and similarly, the bearing forces to their supports. Sensorization can be carried out in both the rotating shaft and in the bearings or their supports, in other words, structure, locking covers, flanges or other mechanical lift systems.

Another objective of the invention is determining the number of sensors and places they are positioned in so that the measures obtained are both in the direction of the shaft or axial, and in the direction of the radius or radial in the suitable direction, obtaining the radial and axial forces instantly and simultaneously and managing this data at all times.

Another objective of the invention is integrating these sensors in the rotary machine, and these sensors can be implemented on elements subjected to continuous movement, measuring local and general deformations of the bearings the rotating shafts are supported on.

Another objective of the invention is obtaining an accurate measurement of the control system and its management for different machine states and temporary events, such as different load and speed levels, operating starts and stops, pauses, emergency stops, one or more pitch control of blades, r.p.m. adjustment, temporary transients due to running or operating loads in the machine, as well as different hypotheses present in component designs.

The advantages provided by the system subject to the invention can be extracted from the previous description:
- Knowledge of the loads and real deformations.
- Adjusted design hypotheses based on real loads.
- Design optimized for real loads.
- Decrease in the probability of failure of the gearbox and its components.
- Improved wind turbine availability.
- Greater tolerance faults caused by overloads.
- Reduction in maintenance costs.

Thanks to the slender but robust design of the sensor structure and the rounded shapes in the sensitive elements localization points, a good signal response to the traction-compression axial loads is found in the direction of the shaft supported by the bearings and to the radials in any diametric direction perpendicular to the shaft symmetry of the shaft supported by the bearings.

In spite of making the sensor's structure more flexible to incorporate the sensitive elements, the equivalent rigidity of the assembly does not suffer any appreciable variations, and therefore the distribution of forces in the different sensorized shaft supports is unaltered.

### Brief description of the figures.

Figure 1 is a general view of the gearbox where the layout of the axes and parts the sensors are coupled to can be seen.
Figure 2 is a section corresponding to the end of the gearbox's intermediate shaft, showing bearing, sensor, auxiliary part, casing and cover layout.
Figure 3 corresponds to one of the possible designs of the gearbox's bushing, on which the sensors measuring the radial forces transmitted by the rotating shaft are installed.
Figure 4 shows the intermediate shaft cover with the detail of the peripheral ribs that measure the axial forces transmitted by the aforementioned rotating shaft.

### Description of a preferred embodiment.

The shaft or axes whose reactions are going to be measured are supported on two or more bushes or bearings that transmit the radial and axial forces to the gearbox casing or body. The intercalation of the sensorized components allows for measuring these radial and axial forces.

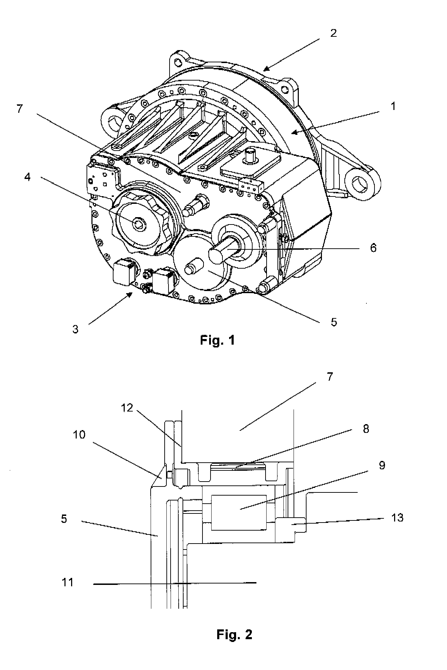

As shown in figure 1, the gearbox is made up of a general body (1) coupled at one of its ends to a rotor hub (2) and by the other to a generator (3) not shown in the figure. The side joined to the generator (3) is covered by a casing (7) with three main rear covers: main shaft cover (4), intermediate shaft cover (5) and quick shaft cover (6). The gearbox's axes and bearings are inside the casing that cover and protect the aforementioned covers.

In figure 2, the housing where the intermediate cover (5) is sectioned and the gearbox casing can be seen inside it (7) in a top plan. Underneath it is a bushing (12) where the radial sensor elements are included (8) next to the bearings (9). It is in this cover (5) where the axial sensor elements are placed in machined ribs (10) for this purpose on its periphery.

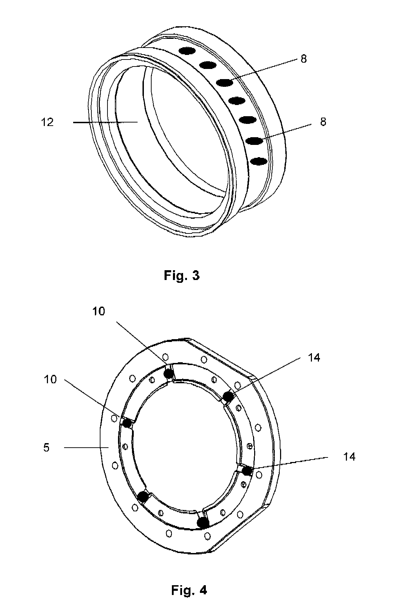

The methodology applied to obtain the sensorization system that is the objective of the invention, is replacing the shaft support elements (11) and bearing with a set of elements including the sensor bushing (12), specific bearing (9), auxiliary parts (13) and cover (5) that reproduce the original geometry and functions. The auxiliary parts (13) are installed between the shaft (11) and the bearing (9) to fix and center the two elements. A bushing (12) is used to measure the radial loads which have the sensor elements (8) tangentially and radially according to the loads to be measured. Figure 3 shows a detail of this layout.

To measure the axial loads, a distribution distributed around a cover (5) has been chosen, in which some ribs (10) have been machined according to axial plans to position the sensor elements. Figure 4 shows the specific location of the axial sensor elements (14)

For sensor (8 and 14) dimensioning and the determination of the optimum measuring points of the sensor elements, their structural response is calculated with theoretical and/or virtual simulation analyses, such as the finite element method, in order to assess both the rigidity and the resistance of the sensor.

The sensor elements may be extensiometric, piezoelectric, capacitive, resistive, fiber optics or other sensory technologies. The layout and assembly will depend on this technology.

The sensor elements will be installed in the previously determined measurement directions according to the magnitudes to be measured and the results of the preliminary theoretical analyses and simulations to obtain the axial and radial sensor.

Sensor assembly will be carried out adapting the new set of elements to the gearbox's general assembly specifications, so that there are no substantial modifications in the distribution of forces.

The sensors are finished off with the electronics required for signal conditioning and treatment.

## Claims

1. Sensorized gearbox installed between the rotor hub (2) and the generator (3), which comprises a plurality of sensors outside and inside it, **characterized by** the sensors (8 and 14) being applied in points near to the bearings and shafts, preferably in bushings (12) and bearing supports or covers (5) and measure the deformations, loads and axial and radial forces of the rotating shafts, measuring instantly and carried out in a control system that controls the wind turbine's power.

2. Sensorized gearbox, according to the first claim, **characterized** because the cover (5) is fixed to the casing walls (7) where the rotating shafts (4, 5 and 6) are supported, transmitting shaft loads (11) to the casing (7). This cover (5) has a number of ribs (10) according to the loads to be measured and the different sensitivity for each angular position, with a sensor element (14) coupled to each rib (10).

3. Sensorized gearbox, according to the 2nd claim, **characterized by** the cover (5) sensors (14) recording axial forces and deformations.

4. Sensorized gearbox, according to the first claim, **characterized by** the bushing (12) being on the casing (7) or body of the gearbox, supporting the bearing (9) and the rotating shaft (11) at the same time, having a number of sensor elements (8) and their fixing is finished off with some auxiliary parts (13) installed between the shaft (11) and bearing (9) to fix and center the two elements.

5. Sensorized gearbox, according to the 4th claim, **characterized by** the bushing's (12) sensor elements (8) being combined to measure the radial loads.

6. Sensorized gearbox, according to the previous claims, **characterized by** the signals emitted by the sensors feeding the wind turbine's control system, becoming digital data that can be stored in an information system and directly used for real time action on the r.p.m. control system, emergency stop, pitch or one or more blades, etc.
